# EUROPEAN PATENT APPLICATION

(11) **EP 4 534 421 A1**
(43) Date of publication of application: **09.04.2025**
(21) Application number: 23811793.1
(22) Date of filing: 22.05.2023
(51) Int. Cl.: B64U 70/83, B64D 17/72, B64D 17/80

(54) **SAFETY DEVICE AND FLYING BODY EQUIPPED WITH SAFETY DEVICE**

(30) Priority: 27.05.2022 JP 2022087279
(71) Applicant: Nippon Kayaku Kabushiki Kaisha, Tokyo 100-0005 (JP)
(72) Inventor: Otsubo, Hideki, Himeji-shi, Hyogo 679-2123 (JP)
(74) Representative: Gille Hrabal Partnerschaftsgesellschaft mbB Patentanwälte
(86) International application number: PCT/JP2023/019035
(87) International publication number: WO 2023/228921

(57) **Abstract**

There are provided a safety device in which it is not necessary to connect a connection member to a flight vehicle and attachment work to the flight vehicle is easy, and a flight vehicle provided with the safety device. A safety device 100 includes an actuator 1, a push-up member 15 pushed up in one direction by the actuator 1, a projectile 16 pushed up while being supported by the push-up member 15, a bottomed cylindrical container 18 that accommodates the actuator 1, the push-up member 15, and the projectile 16, and a lid 21 that closes an opening end of the container 18. A bottom portion of a base 2 is provided with a jig 61 and a blocking tool 62 for mooring the other end portion of a bridle line 70 including one end portion connected to the projectile 16 in the container 18.

## Description

### TECHNICAL FIELD

The present invention relates to a safety device that ejects a projectile such as a parachute or a paraglider, and a flight vehicle provided with the safety device.

### BACKGROUND ART

In recent years, with the development of autonomous control technology and flight control technology, industrial use of a flight vehicle provided with a plurality of rotors called, for example, a drone is accelerating. The drone flies, for example, by simultaneously rotating a plurality of rotors in a balanced manner, and ascent and descent may be performed by increasing or decreasing the number of revolutions of the rotors, and forward and backward movement may be performed by inclining an airframe via increasing or decreasing the number of revolutions of the rotors. Such a flight vehicle is expected to expand worldwide in the future.

On the other hand, the risk of a falling accident of the flight vehicle as described above is considered dangerous, which hinders the spread of the flight vehicle. In order to reduce the risk of such a falling accident, a parachute device for a flight vehicle is being commercialized as a safety device.

For example, as an example of the parachute safety device, the applicant filed an application according to Patent Literature 1 described below. As illustrated in FIG. 1 of Patent Literature 1 described below, a safety device of Patent Literature 1 includes a piston member (sliding member), a cylinder that accommodates the piston member and is provided with a hole for the piston member to protrude outward at the time of activation, a push-up member pushed up in one direction by the piston member, a projectile that is pushed up while being supported by the push-up member, and a gas generator that moves the piston member in the cylinder. The push-up member includes a support portion disposed on an end side of the piston member with respect to a distal end of the piston member in a moving direction of the piston member. Furthermore, a bottom portion of the push-up member is fixed to the distal end of the piston member.

### CITATION LIST

### PATENT LITERATURE

Patent Literature 1: JP 2020-1680 A

### SUMMARY OF INVENTION

### TECHNICAL PROBLEMS

In a case where the projectile is a parachute or the like in the safety device as in Patent Literature 1, the other end of a string-like connection member called a line connected to one end of the parachute may be connected to the flight vehicle. At this time, after the safety device is attached to the flight vehicle, the other end of the connection member needs to be connected to the flight vehicle, which complicates the work of attaching the safety device to the flight vehicle. Furthermore, a fastening portion of the line in the flight vehicle needs to have strength to withstand the energy generated at the time of parachute ejection of the safety device, and for example, in a case where the safety device is attached to the flight vehicle later, the place where the fastening portion is provided is limited.

Therefore, an object of the present invention is to provide a safety device in which it is not necessary to connect a connection member to a flight vehicle, and an attachment portion (fastening portion) having strength capable of fastening and holding a line can be provided at various positions with a relatively high degree of freedom, and attachment work to the flight vehicle is easy, and a flight vehicle provided with the safety device.

### SOLUTIONS TO PROBLEMS

(1) The present invention includes: an ejection unit that ejects a projectile; a container that encloses the projectile and the ejection unit; and a line including one end connected to the projectile, in which the line extends to an outside of the container through a bore portion provided in the container, and includes another end attached to an attachment portion provided in the outside of the container.
(2) In the safety device of (1) described above, the attachment portion preferably includes a jig provided at a bottom portion of the container and including a mooring portion capable of mooring the another end portion of the line.
(3) In the safety device of (2) described above, it is preferable that the mooring portion includes a recess including an opening formed toward a bottom portion side of the container, and the safety device further includes a blocking tool that blocks a surface of the recess on the opening side in a state where the another end portion of the line is moored to the recess.
(4) **In** the safety device of (3) described above, a shape of the blocking tool is preferably formed according to a surface shape of an attachment position of an object to be attached of the safety device.
(5) **In** the safety device of (1) described above, it is preferable that the ejection unit is driven by a gas generator held by a holder, one end portion of the holder is disposed outside a bottom portion of the container, and a portion other than the one end portion of the holder is disposed in the container, and the attachment portion is provided at the one end portion of the holder.
(6) **In** the safety device of (1) described above, it is preferable that the line is provided with a retaining portion formed by applying temporary retaining to at least a portion of the line inside the container by sewing or bonding, and the temporary retaining is released at the time of activation.
(7) In the safety device of (6) described above, the retaining portion is preferably formed in a state where at least a portion of the line inside the container is bent in a Z shape.
(8) A flight vehicle according to the present invention includes the safety device according to any one of (1) to (7) described above, and the projectile includes a parachute or a paraglider.
(9) It is preferable that the flight vehicle of (8) described above includes an airframe serving as a main body, and the safety device is attached to the airframe via the attachment portion.

### ADVANTAGEOUS EFFECTS OF INVENTION

According to the present invention, it is possible to provide a safety device in which it is not necessary to connect a connection member to a flight vehicle, and an attachment portion (fastening portion) having strength capable of fastening and holding a line can be provided at various positions with a relatively high degree of freedom, and attachment work to the flight vehicle is easy, and a flight vehicle provided with the safety device.

### BRIEF DESCRIPTION OF DRAWINGS

FIG. 1 is a schematic cross-sectional view of a safety device according to an embodiment of the present invention.
FIG. 2 is a plan view illustrating a part of a jig according to the safety device of FIG. 1.
FIG. 3 is a plan view illustrating a part of a blocking tool according to the safety device of FIG. 1.
FIG. 4 is a bottom view of the safety device of FIG. 1 in a state before a jig is attached.
FIG. 5 is a bottom view illustrating a state in which a connection member is hooked in a recess and the jig of FIG. 2 is attached from the state of FIG. 4.
FIG. 6 is a bottom view illustrating a state in which the blocking tool of FIG. 3 is attached from the state of FIG. 5.
FIGS. 7(a) and 7(b) are diagrams illustrating a modification of a bridle line used in the safety device of FIG. 1, in which FIG. 7(a) is a diagram illustrating an initial state and FIG. 7(b) is a diagram illustrating a state in which retaining of a retaining portion is released.
FIG. 8 is a diagram illustrating a flight vehicle to which the safety device of FIG. 1 is applied.

### DESCRIPTION OF EMBODIMENT

Hereinafter, a safety device and a flight vehicle according to an embodiment of the present invention will be described with reference to the drawings.

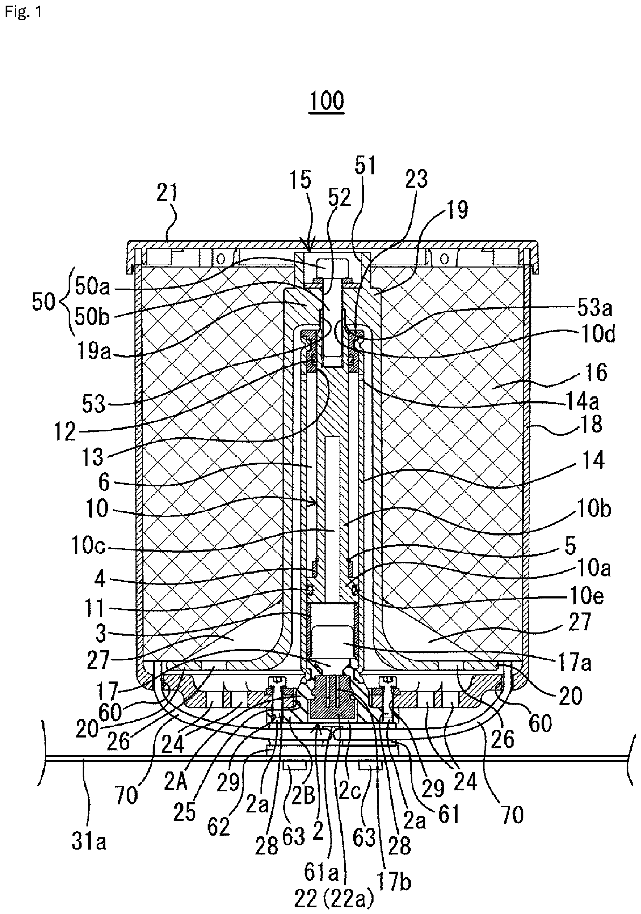

As illustrated in FIG. 1, a safety device 100 includes an actuator 1, a push-up member 15 pushed up in one direction (upward in FIG. 1) by the actuator 1, a projectile 16 pushed up while being supported by the push-up member 15, a bottomed cylindrical container 18 that accommodates the actuator 1, the push-up member 15, and the projectile 16, and a lid 21 that closes an opening end of the container 18. Note that, in the present embodiment, the projectile 16 is a parachute or a paraglider. In the parachute or the paraglider, one end portion of a bridle line 70 to be described later is connected to a line formed by combining the other end portions of a plurality of suspension lines (not illustrated) to which the one end portions are connected.

The actuator 1 includes a piston member 10 that is a sliding member, a cylinder 14 that accommodates the piston member 10 and is provided with a hole portion 13 through which the piston member 10 protrudes outward (upward in FIG. 1) at the time of activation, a base 2 (squib holder) to which one end portion of the cylinder 14 is caulked and fixed and that is attached via a bore portion 25 in the center of the bottom portion of the container 18, and a gas generator (a micro gas generator or the like) 17 as a power source for moving the piston member 10 in the cylinder 14.

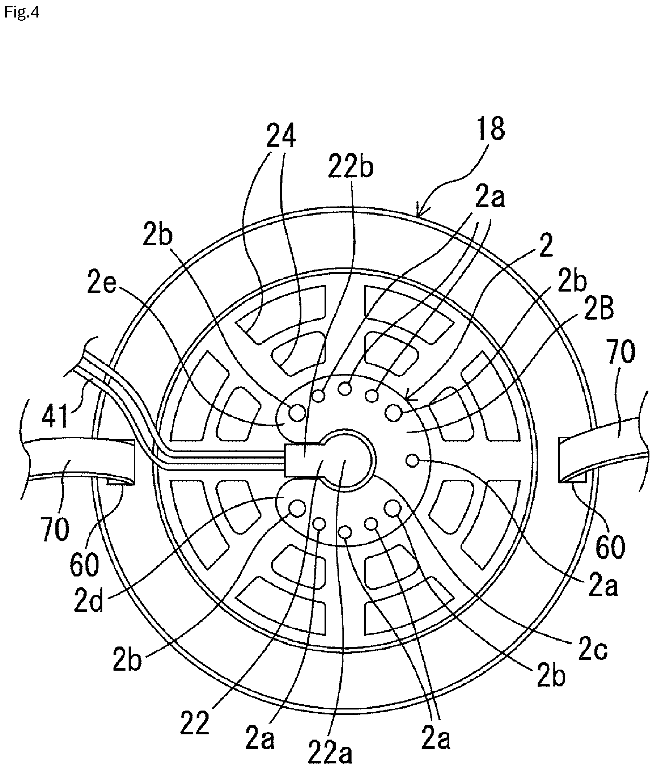

As illustrated in FIGS. 1 and 4, the base 2 includes a substantially cylindrical member 2A that holds the gas generator 17 that generates power for sliding the piston member 10 on the cylinder 14 side, and a flange portion 2B provided on the substantially cylindrical member 2A on a side opposite to the cylinder 14 side.

As illustrated in FIG. 4, the flange portion 2B includes a plurality of bore portions 2a used to attach the flange portion 2B to the container 18 or a jig 61 to be described later, a plurality of bore portions 2b used to attach the flange portion 2B to a top plate portion 31a of an airframe 31 of a flight vehicle 30 to be described later, an insertion port 2c used to fit and insert a connector 22 for energization into an electrode 17b below the gas generator 17, and distal end portions 2d and 2e, and is processed into a substantially horseshoe shape (a shape in which a part of the ring shape is cut out from an outer edge to a center to form a cutout portion between the distal end portions 2d and 2e) having a substantially U shape. An inner wall of the bore portion 2a is internally threaded, and a bolt 28 or a fixing member 64 to be described later is screwed. Furthermore, the inner wall of the bore portion 2b is also internally threaded, and a fixing member 63 is screwed into the flight vehicle 30 described later from an airframe 31 side via bore portions 61d and 62b provided in the jig 61 and a blocking tool 62 described later, so that the base 2 can be fixed to the airframe 31. Furthermore, as illustrated in FIG. 4, each of the distal end portions 2d and 2e of the base 2 is formed in a rounded curved shape (R shape or the like), so that it is possible to prevent a part from being damaged by contact, an injury to a human body, and the like. Furthermore, a space (cutout portion) between the distal end portions 2d and 2e communicates with the insertion port 2c.

As illustrated in FIGS. 1 and 4, the connector 22 includes a main body 22a that can be inserted into the substantially cylindrical member 2A through the insertion port 2c, a protrusion 22b protruding from a side surface of a lower portion of the main body 22a, and a bore portion 22c into which the electrode 17b located in the substantially cylindrical member 2A is fitted. The protrusion 22b is electrically connected to a connector (not illustrated) connected to an external power supply via a wiring 41 extending in a direction perpendicular to an insertion direction of the connector 22 (in the case of being attached to the base 2, along a radial direction from the center of the base 2). Furthermore, the main body 22a is internally provided with the bore portion 22c electrically connected to both the electrode 17b and the wiring 41 connected to the protrusion 22b. The protrusion 22b has a shape conforming to a shape between the distal end portions 2d and 2e of the base 2 (of the portion forming the above-described cutout portion), and is formed so as to be fitted between the distal end portions 2d and 2e of the base 2 (into the portion forming the above-described cutout portion). Thus, the connector 22 can be positioned (oriented) with respect to the insertion port 2c. Furthermore, in a case where the wiring 41 is moved in the circumferential direction of the base 2 after being attached to the insertion port 2c, the connector 22 does not move in the circumferential direction of the base 2, and the electrode 17b below the gas generator 17 can be prevented from being damaged.

Furthermore, the insertion port 2c of the base 2 and the connector 22 are configured to be in a state of extending along the radial direction from the center of the base 2 in the case of being attached to the base 2 so that the wiring 41 can be disposed so as not to block a vent hole 24.

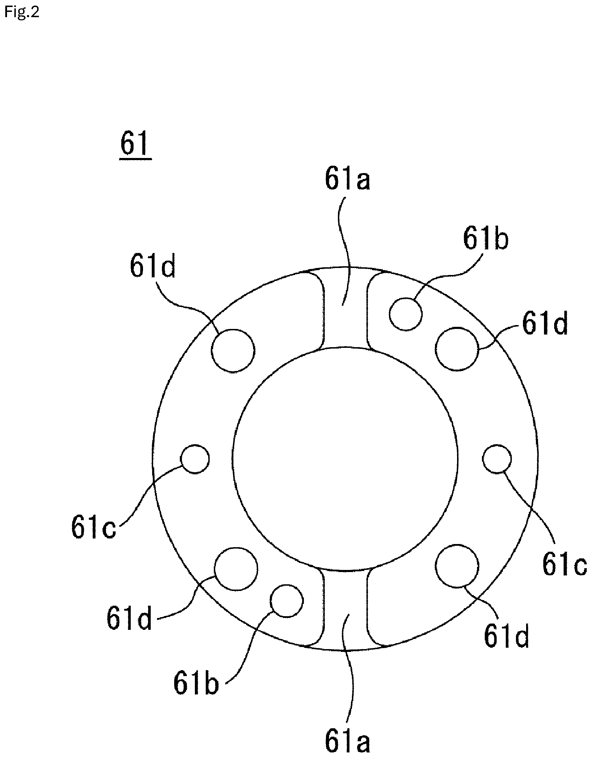

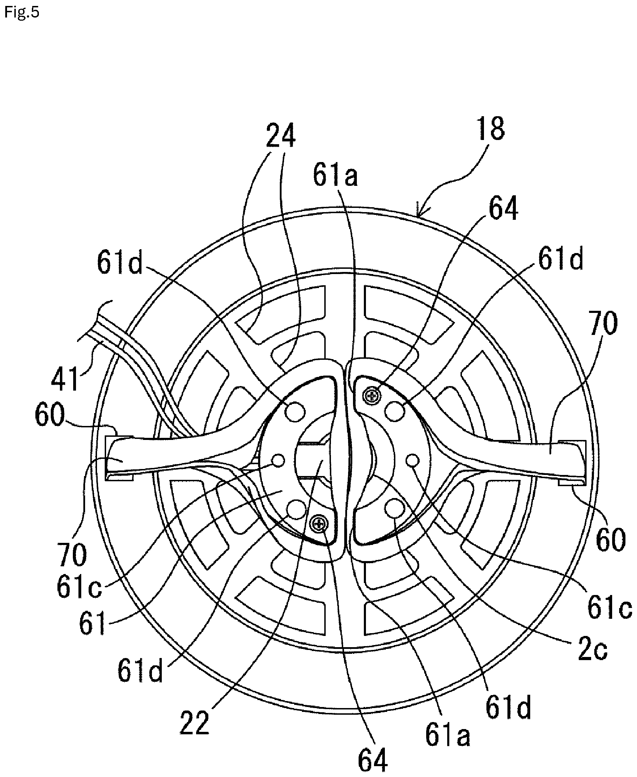

Furthermore, as illustrated in FIG. 5, the jig 61 is fixed to a bottom surface of the base 2 by the fixing member 64. The jig 61 is an annular member made of metal (may be an alloy such as aluminum or iron), resin, or a composite material of resin and metal, CFRP, fiber-reinforced resin, or the like. Furthermore, as illustrated in FIG. 2, the jig 61 includes a recess 61a (mooring portion) capable of mooring the bridle line 70, a bore portion 61b for fixing the jig 61 to the base 2 by the fixing member 64, a bore portion 61c for fixing the blocking tool 62 to be described later to the jig 61 by a fixing member 65, and a bore portion 61d through which the fixing member 63 passes when the top plate portion 31a of the airframe 31 of the flight vehicle 30 to be described later is fixed to the base 2 by the fixing member 63. Here, the fixing member 63 is, for example, a bolt, a screw, or the like, but may be any member as long as it has sufficient strength and fastening force. Furthermore, in a case where the fixing member 65 is a bolt or a screw, the inner wall of the bore portion 61c is internally threaded. Furthermore, the fixing members 64 and 65 are not necessarily required to have strength as high as that of the fixing member 63 as long as they have a predetermined fastening force.

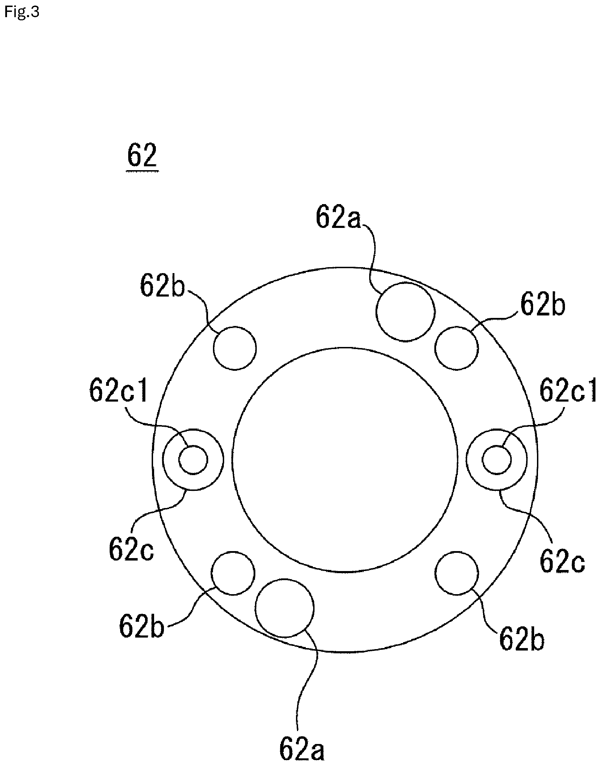

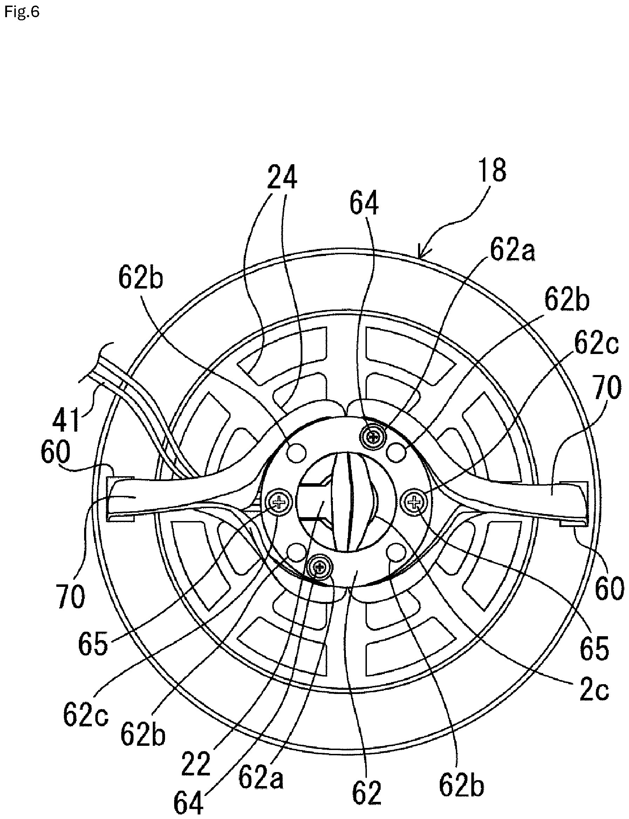

As illustrated in FIG. 6, in a state where the other end portion of the bridle line 70 is moored to the recess 61a of the jig 61, the blocking tool 62 that blocks a surface of the recess 61a on the opening side is fixed to the bottom surface of the jig 61 by the fixing member 65. The blocking tool 62 is an annular member made of metal (may be an alloy such as aluminum or iron), resin, or a composite material of resin and metal, CFRP, fiber-reinforced resin, or the like. As illustrated in FIG. 3, the blocking tool 62 includes a pair of bore portions 62a for positioning at the time of attachment to the jig 61, a bore portion 62b through which the fixing member 63 passes when the top plate portion 31a of the airframe 31 of the flight vehicle 30 described later is fixed to the base 2 by the fixing member 63, and a bore portion 62c. A communication portion 62c1 communicating with the bore portion 61c is provided at a central portion of the bore portion 62c when the blocking tool 62 is attached to the jig 61.

The other end portion of the bridle line 70 is formed in an annular shape, and can be movably attached to the recess 61a of the jig 61 as illustrated in FIG. 5. Furthermore, one end side of the bridle line 70 is disposed inside the container 18 via a bore portion 60 provided at the bottom of the container 18 and is connected to the projectile 16.

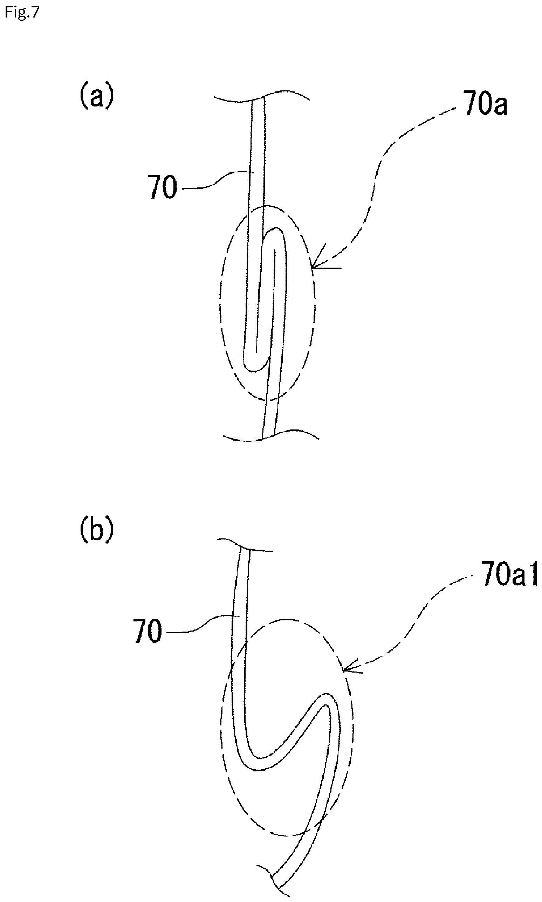

Here, as one modification, a part of a portion of the bridle line 70 disposed inside the container 18 and in the vicinity of the bore portion 60 is temporarily retained by forming a portion bent in a Z shape and stitching (sewing) or bonding by an adhesive, welding, or the like as illustrated in FIG. 7(a). Note that, in the temporary retaining by sewing or bonding, as illustrated in FIG. 7(b), the temporary retaining can be released from a retaining portion 70a in the initial state of FIG. 7(a) to the state of a release portion 70a1 by a tensile force through the suspension line (not illustrated) at the time of activation. That is, in the case of temporary retaining by sewing, the strength of sewing is set to such an extent that the bridle line 70 is pulled at the time of activation to break the sewing. Furthermore, in the case of temporary retaining by bonding, the strength of bonding is set to such an extent that the bridle line 70 is pulled at the time of activation and the bonding is peeled off. Therefore, since the temporary retaining can be released at the time of activation, there is no influence on the ejection of the projectile 16, and after the deployment, the line (provided in the parachute or the like) and the flight vehicle 30 to be described later can uniformly receive a force and be balanced. Furthermore, it is possible to prevent the bridle line 70 from being drawn out from the bore portion 60 of the container 18 by such temporary retaining.

The piston member 10 includes a main body 10a including a portion having an outer diameter substantially equal to an inner diameter of the cylinder 14, a rod-shaped portion 10b connected to the main body 10a, extending upward, and having a smaller diameter than the main body 10a, a bore portion 10c provided inside the main body 10a and the rod-shaped portion 10b, a female screw portion 10d provided at an upper end portion of the rod-shaped portion 10b, and a groove 10e provided in a circumferential direction of the main body 10a.

Although not illustrated, at least an upper end portion side of the rod-shaped portion 10b is formed to have a non-circular cross section. Here, the non-circular shape is, for example, a polygonal shape, an elliptical shape, a star shape, a gear shape, or the like, but any shape is included as long as it is a non-circular shape. Furthermore, in the lower portion of the rod-shaped portion 10b, a tubular member 4 is fitted or loosely fitted in a state where one end portion is in contact with the main body 10a. Note that, although there may be a gap between an inner wall of the tubular member 4 and an outer wall of the rod-shaped portion 10b, the gap may be within a range that does not hinder plastic deformation due to substantially uniform compression at the time of collision described later.

As illustrated in FIG. 1, the tubular member 4 is held by a holding member 5 below the rod-shaped portion 10b in a state where one end portion thereof is in contact with the main body 10a. Furthermore, the tubular member 4 is made of a plastically deformable material and a material (for example, metals such as aluminum and brass, alloys such as stainless steel, resins such as polyamide synthetic resins such as monomer cast nylon, nylon 6, nylon 6,6, nylon 4,6, and the like) having a tensile strength lower than those of the piston member 10 and a stopper member 23 (for example, a metal such as iron, aluminum, brass, or copper, an alloy such as stainless steel, a resin, or the like.) to be described later. Here, the holding member 5 may be an elastic member such as rubber, may be made of the same material as the tubular member 4, and may have a ring shape or a clip shape.

Furthermore, the tubular member 4 and the inner wall portion of the cylinder 14 are separated from each other by a predetermined distance (for example, a distance by which the tubular member 4 plastically deformed by substantially uniform compression when colliding with the stopper member 23 does not come into contact with the inner wall portion of the cylinder 14) or more so that the tubular member 4 does not contact the inner wall portion of the cylinder 14. As a result, even if the tubular member 4 collides with the stopper member 23 and is plastically deformed, the tubular member 4 is deformed without being hindered by the inner wall portion of the cylinder 14, and sufficiently alleviates the impact of the piston member 10.

The bore portion 10c is formed along a central axis from the lower end portion of the main body 10a to the middle of the rod-shaped portion 10b. As a result, the weight of the piston member 10 is reduced as compared with the case where the bore portion 10c is not formed.

The female screw portion 10d is formed from a tip portion of the rod-shaped portion 10b to the middle along the central axis. A male screw portion 50b of a bolt member 50 to be described later can be screwed into the female screw portion 10d.

The groove 10e is provided with a seal member 11 such as an O-ring in the circumferential direction.

The substantially cylindrical stopper member 23 disposed so as to surround a part of the rod-shaped portion 10b of the piston member 10 is provided in an upper portion of the cylinder 14. That is, the rod-shaped portion 10b is disposed in a state of being inserted into the hole portion 13 of the stopper member 23. Furthermore, the cylinder 14 is provided with a through hole 14a for discharging air in a space 6 to the outside at the time of activation. Note that, in FIG. 1, only one through hole 14a is provided, but a plurality of the through holes may be provided in the circumferential direction.

The stopper member 23 restricts the movement of the tubular member 4 within the cylinder 14, and includes a groove 23a provided along the outer periphery and a groove 23b provided along the inner periphery. The groove 23a is used to caulk and fix the other end portion of the cylinder 14 to the stopper member 23. Furthermore, the groove 23b is provided with a seal member 12 such as an O-ring in the circumferential direction.

The material of the cylinder 14 may be selected and the thickness of the outer peripheral portion may be appropriately adjusted so that the cylinder 14 can be plastically deformed in the radial direction of the cylinder in a case where the piston member 10 of the actuator 1 becomes immovable for some reason and in a case where the gunpowder burns and a combustion pressure greater than or equal to a withstand pressure value of the cylinder 14 is generated when the initial combustion volume of the actuator 1 is reduced (in an abnormal situation). Examples of the material constituting the cylinder 14 include metals such as iron, aluminum, brass, and copper, and alloys such as stainless steel. As a result, since the cylinder 14 is plastically deformed in the radial direction at the time of the abnormal situation, the sealing performance of the seal member 12 such as the O-ring is deteriorated (alleviated), and a gap through which the generated gas can pass is formed between the seal member 12 and the inner wall of the cylinder 14. Therefore, by allowing the gas generated at the time of the abnormal situation to leak out from the gap, the gas is discharged from the through hole 14a to the outside of the cylinder 14, then passes through the inside of the container 18 from the gap between the outer wall of the cylinder 14 and an inner wall of a bottomed cylindrical portion 19, and is discharged from the vent hole 24 to the outside of the container 18, so that the cylinder 14 can be prevented from being broken (fail-safe function). Note that, in the case of having this fail-safe function, a space (gap) is provided between the outer wall of the cylinder 14 and the inner wall of the bottomed cylindrical portion 19 so that the cylinder 14 can be sufficiently plastically deformed in the radial direction.

The gas generator 17 is disposed below the main body 10a described later of the piston member 10 in a state of being press-fitted into an opening end below the cylinder 14. Furthermore, a cylindrical member 3 for forming a predetermined distance from the piston member 10 is provided around a cup body 17a of the gas generator 17.

The push-up member 15 is made of metal (may be an alloy such as aluminum or iron.), resin, or a composite material of resin and metal, CFRP, fiber reinforced resin, or the like, and as illustrated in FIG. 1, includes the bottomed cylindrical portion 19 disposed so as to cover a part of the cylinder 14, that is, an outer portion of the cylinder 14 except for the vicinity of the opening end on a side where the gas generator 17 is disposed, and a disk-shaped support portion 20 provided as a flange (flange-shaped portion) at the opening of the bottomed cylindrical portion 19 to support the projectile 16.

The bottomed cylindrical portion 19 includes a bottom portion 19a having a substantially flat plate shape or a substantially columnar shape (substantially columnar shape in the present embodiment), a bore portion 51 formed on a lid 21 side of the bottom portion 19a, a bore portion 52 (second bore portion) having a diameter smaller than that of the bore portion 51, and a bore portion 53 (first bore portion) communicating with the bore portion 51 through the bore portion 52 and having a diameter larger than that of the bore portion 52. The bore portion 51 has a diameter larger than a diameter of a head portion 50a of the bolt member 50. The bore portion 52 has a diameter smaller than the diameter of the head portion 50a, and can guide to a bore portion 53 side the male screw portion 50b of the bolt member 50 inserted from a bore portion 51 side. The bore portion 53 has substantially the same shape as the one end portion (upper end portion) of the rod-shaped portion 10b, and is a fitting portion to which the one end portion of the rod-shaped portion 10b is fitted by inserting the one end portion of the rod-shaped portion 10b from an insertion opening 53a provided on the cylinder 14 side of the bottom portion 19a of the bottomed cylindrical portion 19.

The bolt member 50 connects the rod-shaped portion 10b and the push-up member 15 by inserting the male screw portion 50b into the bore portion 52 from the bore portion 51 side and screwing it into the female screw portion 10d of the rod-shaped portion 10b fitted in the bore portion 53. At this time, since one end portion of the rod-shaped portion 10b has a non-circular shape and is fitted in the bore portion 53 having substantially the same shape, the rod-shaped portion 10b does not rotate together when the bolt member 50 is screwed into the female screw portion 10d. Specifically, since the distal end portion of the push-up member 15 and the distal end portion of the piston member 10 are non-circular and fitted, the push-up member 15 can be rotated while being fixed when being fastened by the bolt member 50, and the piston member 10 can be tightened toward the gas generator 17 and can be tightened without being co-rotated.

The support portion 20 is provided apart from the bottom inner surface of the container 18 in the initial state. Furthermore, the support portion 20 has a vent hole 26 for reducing the influence of the negative pressure generated between the bottom portion of the projectile 16 and the support portion 20 at the time of activation to facilitate ejection of the projectile 16. Furthermore, the outer peripheral portion of the support portion 20 is formed so as not to contact the inside of the container 18. Furthermore, at least one movement prevention member 27 (eight parts in the present embodiment) for preventing the projectile 16 from moving in the circumferential direction of the bottomed cylindrical portion 19 is provided on the upper surface of the support portion 20.

The movement prevention member 27 is a substantially triangular member made of resin or a composite material of resin and metal, CFRP, a fiber-reinforced resin, or the like, and a plurality of the movement prevention members are provided so as to be rotationally symmetric about the bottomed cylindrical portion 19. Furthermore, the vent hole 26 is provided between these movement prevention members 27. Here, as a modification, only one movement prevention member 27 may be provided. Even in this case, a plurality of the vent holes 26 are provided in the support portion 20.

As illustrated in FIG. 1, a bottom portion of the container 18 is provided with a plurality of the vent holes 24 that communicate the inside and the outside of the container 18, the bore portion 25 into which the base 2 is inserted, and a bolt fastening bore 29. Furthermore, as illustrated in FIG. 1, the bottom portion of the container 18 has a recess in a central portion, and at least two step shapes are formed by the central portion and the periphery of the central portion. Note that when the push-up member 15 rapidly moves in the container 18, a negative pressure is generated in a region between the push-up member 15 and the bottom surface of the container 18. Therefore, it is difficult to move the push-up member 15. Therefore, by providing the vent holes 24, the negative pressure phenomenon can be reduced, and the push-up member 15 can be smoothly moved. Furthermore, the bore portion 2a provided in the flange portion of the base 2 located outside the bottom portion of the container 18 is fastened and fixed from the inside of the container 18 with the bolt 28 via the bore 29, whereby the bore portion 25 is closed. Furthermore, by reducing a distance between the support portion 20 and the bottom surface inside the container 18, the projectile 16 is prevented from falling onto the bottom surface inside the container 18.

Furthermore, the projectile 16 is accommodated in the container 18 between the inner surface of the container 18 and the outer surface of the bottomed cylindrical portion 19 of the push-up member 15, for example, so as to surround the outer surface of the bottomed cylindrical portion 19. Furthermore, the projectile 16 is folded so that the outer side thereof does not contact the inner side of the container 18. Note that the projectile 16 is connected to, for example, one end of a string (not illustrated), and the other end of the string is connected to the inside of the container 18 (For example, it is fastened to the support portion 20 via the plurality of vent holes 26.) or the airframe 31 of the flight vehicle 30 described later. Here, as a modification, the projectile 16 may be folded in a state where the outer side thereof is in contact with the inner side of the container 18.

As the gas generator 17, only an igniter may be used, or a gas generator including an igniter and a gas generating agent may be used. Furthermore, a hybrid type or a stored type gas generator that cleaves a sealing plate in a small gas cylinder by a gunpowder type igniter and discharges internal gas to the outside may be used. In this case, as the pressurized gas in the gas cylinder, a non-flammable gas such as argon, helium, nitrogen, or carbon dioxide, or a mixture thereof can be used. Furthermore, in order to reliably propel the piston when the pressurized gas is released, the gas generator may be provided with a heating element including a gas generating agent composition, a thermite composition, or the like.

Note that the piston member 10, the cylinder 14, the push-up member 15, the gas generator 17, and the like mainly constitute an ejection unit that ejects the projectile 16.

In the above configuration, when the gas generator 17 is activated when, for example, a flight vehicle or the like on which the safety device 100 is mounted falls, the piston member 10 is propelled upward in the cylinder 14 by the pressure of the gas generated by the activation. As a result, the push-up member 15 including the bottomed cylindrical portion 19 connected to the rod-shaped portion 10b of the piston member 10 propels (protrudes) upward in the container 18. As a result, the lid 21 is detached, the opening end portion of the container 18 is opened, and the projectile 16 is ejected outward (in an upward direction of the paper surface of FIG. 1) from the inside of the container 18. At this time, the piston member 10 and the tubular member 4 move upward, but the tubular member 4 collides with the stopper member 23 and stops. Then, in a case where the projectile 16 is a parachute or a paraglider, the projectile 16 is ejected from the container 18 and then developed. Thereafter, when tension (tensile force) is applied to the suspension line and the bridle line 70, the tension is received by at least the fixing member 63.

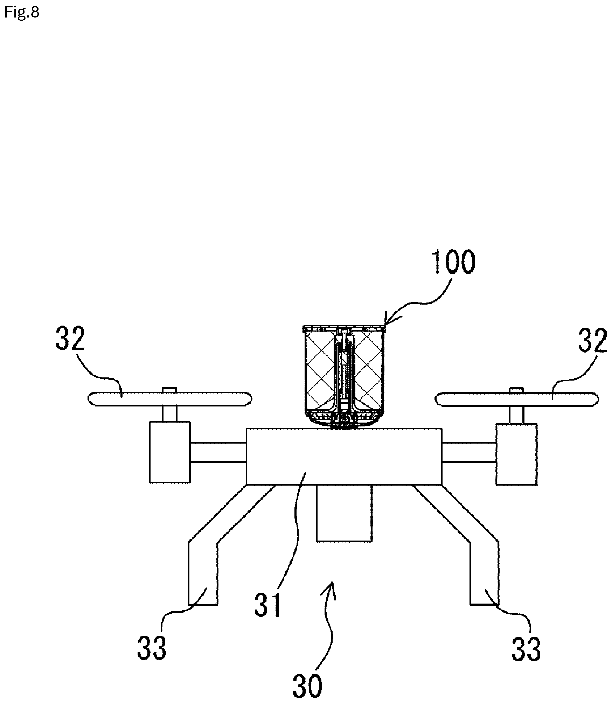

As illustrated in FIG. 1, the safety device 100 is connected and fixed to the top plate portion 31a of the airframe 31 of the flight vehicle 30 by the fixing member 63 from the airframe 31 side via the bore portion 62b of the blocking tool 62, the bore portion 61d of the jig 61, and the bore portion 2b of the base 2. At this time, as illustrated in FIG. 1, the base 2 connects the container 18 and the airframe 31 at a position where the vent hole 24 is not closed. Therefore, as illustrated in FIG. 8, the flight vehicle 30 includes the airframe 31, the safety device 100 coupled to the airframe 31, one or more propulsion mechanisms (for example, propellers) 32 that are coupled to the airframe 31 and propel the airframe 31, and a plurality of legs 33 provided in a lower portion of the airframe 31.

Furthermore, although not illustrated in FIG. 8, the safety device 100 in such the flight vehicle 30 can be attached in a state where the wiring 41 and a connector (not illustrated) are exposed in a lateral direction of FIG. 8. Therefore, this configuration facilitates connection to wiring (not illustrated) extracted from any of the airframe 31 of the flight vehicle 30. Furthermore, since only the base 2 part avoids the wiring in an upper part of the flight vehicle 30, the space between the bottom surface of the container 18 and the upper surface of the flight vehicle 30 can be effectively used.

As described above, according to the present embodiment, it is not necessary to connect the connection member such as the bridle line 70 to the airframe 31 of the flight vehicle 30, and the safety device 100 that can be easily attached to the flight vehicle 30 can be obtained by using the jig 61. Furthermore, in a case where it is preferable to connect the bridle line 70 to the airframe 31 of the flight vehicle 30, the jig 61 and the blocking tool 62 are removed, and the other end portion of the bridle line 70 is connected to a preferable portion of the airframe 31. That is, according to the present embodiment, the attachment portion to which the connection member such as the bridle line 70 is attached can be provided at various positions of the flight vehicle 30 or the safety device 100 with a relatively high degree of freedom.

Furthermore, the projectile 16 is deployed after being ejected from the container 18, and thereafter, a tension (tensile force) is applied to the suspension line and the bridle line 70. At this time, by designing such that the tension can be received only by the fixing member 63 (the strength of the fixing member 63 is considered), it is not necessary to consider the strength of the jig 61. That is, the jig 61 only needs to have strength enough to moor the bridle line 70 in the initial state, and is easy to design. At this time, when the jig 61 is made of a relatively lightweight material such as resin, the safety device 100 is relatively lightweight. Note that, as a matter of course, the jig 61 may be made of a material having relatively high strength as necessary.

Furthermore, a part of the connector 22 (a part connected to the wiring 41) has a shape conforming to the shape between the distal end portions 2d and 2e of the base 2. Thus, the connector 22 can be positioned (oriented) with respect to the insertion port 2c. Furthermore, in a case where the wiring 41 is moved in the circumferential direction of the base 2 after being attached to the insertion port 2c, the connector 22 does not move in the circumferential direction of the base 2, and the electrode 17b below the gas generator 17 can be prevented from being damaged.

Since the flange portion 2B of the base 2 is provided outside the bottom portion of the container 18, the base 2 can be directly attached to the airframe 31 of the flight vehicle 30. As a result, the reaction at the time of activation is directly received by the airframe 31 not via the container 18, but the influence at the time of activation on the container 18 can be reduced, so that the strength of the bottom portion of the container 18 can be reduced as compared with the case where the base 2 is provided inside the container 18. That is, the strength of the bottom portion of the container 18 can be more safely reduced (for example, as a design for reducing a thickness of the bottom portion of the container 18 to a predetermined safe thickness) than before, and the container 18 as a whole can be made lighter than before while ensuring the same safety as before. Furthermore, since the step is provided on the bottom surface of the container 18, the strength of the bottom surface of the container 18 can be enhanced as compared with a flat bottom surface having no step.

Furthermore, since the connector 22 has a characteristic shape having the protrusion 22b, it is possible to prevent erroneous insertion of the connector.

Furthermore, it is not always necessary to provide a power supply wiring for the safety device 100 on the flight vehicle 30 side in the vicinity of the immediate lower portion of the safety device 100. This contributes to ease of the design of the flight vehicle 30.

Furthermore, since each of the distal end portions of the base 2 has a rounded shape (R shape), it is possible to prevent scratching of the bases 2 at the time of manufacturing the base 2 (when the base 2 is in a part feeder or the like), as compared with the case of a shape in which a fan-shaped portion is simply linearly cut out from the outer side of the circular shape toward the center (in a case where the distal end portion has an acute angle shape).

Furthermore, in a case where the wiring 41 connected to the connector 22 is attached to the base 2, it is in a state of being extended along the radial direction from the center of the base 2, so that the wiring is easily performed. Furthermore, since the wiring 41 is disposed so as not to block the vent hole 24, the function of the vent hole 24 is not hindered.

Furthermore, it is possible to obtain the flight vehicle 30 including the safety device 100 having the above-described configuration.

Although the embodiment of the present invention has been described above with reference to the drawings, it should be understood that the specific configuration is not limited to the embodiment. The scope of the present invention is defined not by the description of the above embodiment but by the claims, and includes meanings equivalent to the claims and all modifications within the scope. For example, the present invention includes the following modifications.

**In** the above embodiment, the bottom surface of the blocking tool 62 is a flat surface in accordance with the shape of the top plate portion 31a of the airframe 31 of the flight vehicle 30, but the present invention is not limited thereto. That is, the shape of the bottom surface of the blocking tool 62 may be changed in accordance with the surface shape of the position to which the airframe 31 (object to be attached) is to be attached. Furthermore, when the blocking tool 62 is made of resin, the shape of the bottom surface of the blocking tool 62 can be easily formed into various shapes, and thus versatility to various flight vehicles is enhanced. Note that, as long as the fixing member 63 is designed to withstand the tension from the suspension line and the bridle line 70, the strength of the blocking tool 62 may be a strength enough to moor the bridle line 70 in the initial state together with the jig 61.

Furthermore, the bridle line may extend to the outside of the container through a bore portion provided at any position (a bottom portion, a side portion, etc.) of the container, and the other end may be attached to any position (a bottom portion, a side portion, etc.) outside the container or an attachment portion (a portion to which the other end portion of the bridle line can be fixed, such as a protrusion, a recess, or the like, or a portion to which the other end portion of the bridle line can be fixed, such as a portion to which the other end portion of the bridle line can be hooked or a portion to which the other end portion of the bridle line can be tightened.) provided on a base (squib holder).

Furthermore, in the above embodiment, the bridle line 70 is moored to the recess 61a, but the recess shape may not be adopted as long as the fixing member 63 can receive the tension and the other end portion of the bridle line 70 can be moored.

Furthermore, in the above embodiment, a part of the base 2 is located outside the container 18, but the entire base 2 may be located inside the container 18. At this time, the jig and the blocking tool are configured to be fixed to the base inside the container via the bottom portion of the container.

Furthermore, in each of the above embodiments, the gas generator is adopted as the drive source, but the configuration is not limited as long as it is possible to impart a driving force to the sliding member for propelling the sliding member inside the cylinder, and for example, an elastic body type using an elastic body such as a spring, a gas cylinder type using a gas pressure confined in a container, a chemical reaction type (non-gunpowder) in which two or more substances are mixed and chemically reacted to generate a gas pressure, or the like may be adopted. Furthermore, instead of the ejection device of the above embodiment and modification, a pull-out type (also referred to as a tensile type) ejection device may be used. Examples of the pull-out type ejection device include a method of launching a rocket and pulling out a parachute, a method of releasing a weight with an actuator and pulling out a parachute, a method of launching a projectile with an actuator and pulling out a parachute, and a method in which a pilot chute accommodated in a separate container is first ejected by an ejection device, and then a parachute is pulled out of the container according to the present invention by the pilot chute.

Furthermore, in the above embodiment, the container 18 is formed in a cylindrical shape, but the present invention is not limited thereto, and may be formed in another shape such as a quadrangular cylinder.

Furthermore, in each of the above embodiments, in a case where a parachute or a paraglider is employed as the projectile, the parachute or the paraglider may be packed. Note that the packing is configured to be broken or peeled off at the time of activation.

Moreover, in each of the above embodiments, the parachute or the paraglider is exemplified as the projectile, but the projectile is not limited thereto, and one including a lift generation member may be ejected as the projectile. Examples of the lift generation member include a parafoil, a rogalo parachute, a single surface parachute, an airplane wing, a propeller, and a balloon. Furthermore, in a case where the lift generation member includes a control line, it is desirable that the safety device include a steering mechanism capable of changing an inclination angle of the ejected lift generation member using the control line. This steering mechanism includes, for example, a plurality of reels for winding up a plurality of the control lines connected to the lift generation member, respectively, and a motor serving as power of these reels. By winding up or pulling out the control lines by driving the motor, it is possible to appropriately pull the lift generation member or loosen the pulling.

Furthermore, instead of the parachute or the paraglider, a flight vehicle may be provided with a safety device capable of ejecting a net. Thus, when the net is ejected toward the hook or the protrusion at the same timing, the flight vehicle can be hooked on the hook or the protrusion. As a result, it is possible to prevent the flight vehicle from falling and colliding with the ground.

Furthermore, the flight vehicle may be provided with a safety device capable of ejecting a contracted or folded floating wheel (float) together with a drive mechanism (an expansion device including a gas generator or the like) by an actuator and expanding and developing the floating wheel by the drive mechanism. As a result, it is possible to prevent the flight vehicle from being submerged, and it is possible to mark a recovery place when the flight vehicle has fallen.

Furthermore, the flight vehicle may be provided with a safety device capable of ejecting a contracted or folded floating wheel (float) and a parachute together with a drive mechanism (an expansion device including a gas generator and the like) by an actuator and deploying the floating wheel and the parachute by the drive mechanism. As a result, it is possible to reduce the falling speed of the flight vehicle at the time of crash, prevent the flight vehicle from being submerged, and further, serve as a mark of a recovery place when the flight vehicle has fallen.

Furthermore, a parachute may be ejected together with a drive mechanism (such as a cutting device including a drive unit) by an actuator, and after the parachute is deployed, a part of a plurality of connection members connecting the parachute and the flight vehicle may be cut by the drive mechanism, the parachute and the flight vehicle may be dropped sideways with the center of gravity of the airframe of the flight vehicle shifted, and thereafter, the flight vehicle may be provided with a safety device capable of mitigating impact of collision with the ground or the like using an airbag device provided on a side surface on a falling side of the flight vehicle.

Furthermore, a so-called paramotor may be ejected together with a drive mechanism (including a drive unit such as a power source) by an actuator, and the flight vehicle may be provided with a safety device capable of rotating the propeller by driving the motor by the drive mechanism after the parachute or the paraglider is completely deployed. This prevents the parachute or the paraglider from getting entangled in the propeller. Note that the paramotor is capable of flying by providing power (such as a propeller rotary machine by a motor) in a harness portion of the parachute or the paraglider and obtaining thrust.

Furthermore, the flight vehicle may be provided with a safety device capable of ejecting a sound generator together with a drive mechanism (including a drive unit such as a power supply) by an actuator, operating the sound generator by the drive mechanism when the flight vehicle falls, and notifying the surroundings of danger.

Furthermore, the flight vehicle may be provided with a safety device capable of ejecting a lighting device (such as a flash light) together with a drive mechanism (including a drive unit such as a power source) by an actuator, operating the lighting device by the drive mechanism when the flight vehicle falls, and notifying the surroundings of danger.

Furthermore, the flight vehicle may be provided with a safety device capable of spraying a fire extinguishing agent to the airframe and the surroundings of the flight vehicle by ejecting the fire extinguisher together with a drive mechanism (including a drive unit such as a power supply) by an actuator and operating the fire extinguisher by the drive mechanism when the flight vehicle falls.

Furthermore, the flight vehicle may be provided with a safety device that ejects, together with a drive mechanism, a parachute-equipped mounted object (for example, expensive devices) that has been previously ejectably mounted by an actuator, and causes the drive mechanism to deploy the parachute of the parachute-equipped mounted object. As a result, the parachute-equipped mounted object can be intensively protected.

Furthermore, the flight vehicle may be provided with a safety device that ejects, together with a drive mechanism (an expansion device including a gas generator or the like), a mounted object with an airbag device (for example, expensive devices) mounted in advance in an ejectable manner by an actuator, and inflates and deploys an airbag of the mounted object with the airbag device by the drive mechanism. Accordingly, it is possible to intensively protect the mounted object with the airbag device.

Furthermore, a flight vehicle may be provided with a safety device capable of ejecting a rescue signal transmission device together with a drive mechanism (including a drive unit such as a power source) by an actuator, operating the rescue signal transmission device by the drive mechanism when the flight vehicle falls, and transmitting a rescue signal to the outside. As a result, in a case where the flight vehicle falls, the falling point can be specified.

Furthermore, the flight vehicle may be provided with a safety device in which a black box with a parachute (such as a flight recorder) is ejected together with a drive mechanism (such as an expansion device including a gas generator) by an actuator, and a parachute of the black box with the parachute is deployed by the drive mechanism when the flight vehicle falls. Accordingly, the black box with the parachute can be intensively protected. As a result, the flight data can be protected.

### REFERENCE SIGNS LIST

1 actuator
2 base
2A, 3 cylindrical member
2B flange portion
2a, 2b, 10c, 22c, 25, 51, 52, 53, 60, 61b, 61c, 61d, 62a, 62b, 62c bore portion
2c insertion port
2d, 2e distal end portion
4 tubular member
5 holding member
6 space
10 piston member
10a, 22amain body
10b rod-shaped portion
10d female screw portion
10e, 23a, 23b groove
11, 12 seal member
13 hole portion
14 cylinder
14a through hole
15 push-up member
16 projectile
17 gas generator
17a cup body
17b electrode
18 container
19 bottomed cylindrical portion
19a bottom portion
20 support portion
21 lid
22 connector
22b protrusion
23 stopper member
24, 26 vent hole
27 movement prevention member
28 bolt
29 bore
30 flight vehicle
31 airframe
33 leg
41 wiring
50 bolt member
50a head portion
50b male screw portion
53a insertion opening
62c1 communication portion
63, 64, 65 fixing member
70 bridle line
70a retaining portion
70a1 release portion
100 safety device

## Claims

1. safety device comprising:
an ejection unit that ejects a projectile;
a container that encloses the projectile and the ejection unit; and
a line including one end connected to the projectile,
wherein the line extends to an outside of the container through a bore portion provided in the container, and includes another end attached to an attachment portion provided on the outside of the container.

2. The safety device according to claim 1, wherein the attachment portion includes a jig provided at a bottom portion of the container and including a mooring portion capable of mooring the another end portion of the line.

3. The safety device according to claim 2, wherein
the mooring portion includes a recess including an opening formed toward a bottom portion side of the container, and
the safety device further includes a blocking tool that blocks a surface of the recess on the opening side in a state where the another end portion of the line is moored to the recess.

4. The safety device according to claim 3, wherein a shape of the blocking tool is formed according to a surface shape of an attachment position of an object to be attached of the safety device.

5. The safety device according to claim 1, wherein
the ejection unit is driven by a gas generator held by a holder,
one end portion of the holder is disposed outside a bottom portion of the container, and a portion other than the one end portion of the holder is disposed in the container, and
the attachment portion is provided at the one end portion of the holder.

6. The safety device according to claim 1, wherein
the line is provided with a retaining portion formed by applying temporary retaining to at least a portion of the line inside the container by sewing or bonding, and
the temporary retaining is released at a time of activation.

7. The safety device according to claim 6, wherein the retaining portion is formed in a state where at least a portion of the line inside the container is bent in a Z shape.

8. flight vehicle comprising the safety device according to any one of claims 1 to 7,
wherein the projectile includes a parachute or a paraglider.

9. The flight vehicle according to claim 8, further comprising an airframe serving as a main body,
wherein the safety device is attached to the airframe via the attachment portion.
